# EUROPÄISCHE PATENTSCHRIFT

(11) **EP 1 104 365 B1**
(45) Veröffentlichungstag und Bekanntmachung des Hinweises auf die Patenterteilung: **27.02.2002**
(21) Anmeldenummer: 99952371.5
(22) Anmeldetag: 12.08.1999
(51) Int. Cl.: B60R 16/02

(54) **BUSSYSTEM IN EINEM FAHRZEUG UND VERFAHREN ZUR ÜBERTRAGUNG VON NACHRICHTEN**
BUS SYSTEM IN A MOTOR VEHICLE AND METHOD FOR TRANSMITTING MESSAGES
SYSTEME DE BUS INSTALLE DANS UN VEHICULE ET PROCEDE DE TRANSMISSION D'INFORMATIONS

(30) Priorität: 17.08.1998 DE 19837242
(43) Veröffentlichungstag der Anmeldung: 06.06.2001
(73) Patentinhaber: SIEMENS AKTIENGESELLSCHAFT, 80333 München (DE)
(72) Erfinder: TEINER, Markus, D-93057 Regensburg (DE); HARTKE, Andreas, D-80807 München (DE)
(86) Internationale Anmeldenummer: DE9902519
(87) Internationale Veröffentlichungsnummer: WO0010838

(56) Entgegenhaltungen:
- EP-A- 0 857 616
- DE-A- 19 529 434
- DE-A- 19 541 816
- ABUL MASRUR: "STUDIES ON SOME ALTERNATIVE ARCHITECTURES FOR FAULT-TOLERANT AUTOMOTIVE MULTIPLEXING NETWORK SYSTEMS" IEEE TRANSACTIONS ON VEHICULAR TECHNOLOGY,US,IEEE INC. NEW YORK, Bd. 40, Nr. 2, Seite 501-510 XP000234907 ISSN: 0018-9545
- Bosch Kraftfahrzeugtechnisches Taschenbuch, VDI-Verlag Düsseldorf (DE), 21. Auflage 1991, Seiten 472-477 und 776-778

## Beschreibung

Die Erfindung betrifft ein Bussystem zum Verbinden von Steuereinheiten in einem Fahrzeug und ein Verfahren zur Übertragung von Nachrichten zwischen Steuereinheiten, die an ein Bussystem angeschlossen sind, gemäß den Oberbegriffen der unabhängigen Patentansprüche.

Ein solches Bussystem und ein solches Verfahren zum Übertragen von Nachrichten ist aus Bosch, Kraftfahrzeugtechnisches Taschenbuch, VDI Verlag Düsseldorf, 21. Auflage 1991, auf den Seiten 472 bis 477 und 776 bis 778 beschrieben.

In modernen Kraftfahrzeugen besteht zunehmend die Notwendigkeit, mehrere Steuereinheiten und Sensoren miteinander zu verbinden. Solche Steuereinheiten sind beispielsweise eine elektronische Motorsteuerung und die Steuerung eines Automatikgetriebes. Um eine solche Steuereinheit bei einem Werkstattaufenthalt neu zu programmieren oder Fehler auszulesen, ist im Fahrzeug ein Diagnosebus angeordnet.

Bei modernen Fahrzeugen werden zusätzliche Steuereinheiten eingesetzt, wie beispielsweise eine Steuerung für einen elektromagnetischen Ventiltrieb oder eine Steuerung für einen Kurbelwellen-Starter-Generator. Diese müssen miteinander über ein Bussystem kommunizieren, um optimales Funktionieren der entsprechenden Kraftfahrzeugkomponenten zu gewährleisten.

Aus der Offenlegungsschrift DE 39 34 974 A1 ist eine Vorrichtung zur Funktionskontrolle mehrerer Steuergeräte in einem Kraftfahrzeug bekannt, bei der die Steuergeräte über einen Kommunikationsbus und einen Diagnosebus miteinander verbunden sind. Eine Busleitung dient zur Übertragung von Kontrollsignalen und die andere Leitung ist als Statusleitung vorgesehen.

Die Offenlegungsschrift DE 43 38 707 A1 offenbart ein Multiplexsystem für ein Kraftfahrzeug, bei dem wenigstens zwei Teilnehmer über Schnittstellen verbunden sind. Ein Teilnehmer weist ein Eingabeelement auf, dem eine Ausgabe in einem zweiten Teilnehmer entspricht. Zur Erhöhung der Betriebssicherheit ist eine Redundanzleitung unter Umgehung der Schnittstellen unmittelbar vom Eingabeelement zur Ausgabe geführt.

Es ist ein Ziel der Erfindung, ein Bussystem und ein Verfahren zur Übertragung von Nachrichten zwischen Steuereinheiten eines Fahrzeugs bereitzustellen, die eine besonders zuverlässige, gegen eine Unterbrechung gesicherte Kommunikation der an das Bussystem angeschlossenen Systeme gewährleisten und problemlos einen externen Zugriff auf die an das Bussystem angeschlossenen Steuereinheiten ermöglichen.

Dieses Ziel wird mit einem Bussystem und einem Verfahren zur Übertragung von Nachrichten erreicht, wie sie in den unabhängigen Patentansprüchen definiert sind. Vorteilhafte Weiterbildungen der Erfindung sind in den Unteransprüchen angegeben.

Aufgrund der Verbindung der Steuereinheiten mit einem Applikations- oder Diagnosebus kann ein Programmieren der Steuereinheiten oder ein Auslesen von deren Fehlerspeichern auf sehr effiziente Weise erfolgen, vorzugsweise unter Nutzung einer einzigen Schnittstelle.

In einer bevorzugten Ausführungsform der Erfindung kann vor dem Start einer Serienfertigung der Applikations- oder Diagnosebus zum Ermitteln der optimalen Parameter einer oder mehrerer mit diesem Bus verbundener Steuereinheiten ermittelt werden. Eine Übertragung der Applikations-Parameter kann auch erfolgen, während der Motor eines Fahrzeugs betrieben wird (online) erfolgen, ohne daß eine Störung der Nachrichtenübertragung zwischen den Steuereinheiten auf dem Kommunikations-bus auftritt.

Da der Applikations- oder Diagnosebus während des Betriebs des Fahrzeugs beim Endkunden nicht benötigt wird, steht er für die Kommunikation zwischen den Steuereinheiten zur Verfügung, wenn der Kommunikationsbus einen Defekt aufweist. Dies ist besonders wichtig, wenn über dem Kommunikationsbus Nachrichten ausgetauscht werden, die die Fahrzeugsicherheit betreffen. Dies ist insbesondere der Fall, wenn am Bussystem Steuereinheiten für eine elektromechanische Bremse (break by wire) oder für einen Airbag angeschlossen sind.

Zweckmäßigerweise arbeiten sowohl der Kommunikationsbus als auch der Applikations- oder Diagnosebus nach demselben Bus-protokoll.

Besonders einfach läßt sich die Ausgabe der Nachrichten auf den Kommunikationsbus und/oder auf den Applikations/Diagnosebus steuern, wenn eine einzige Steuereinheit dazu bestimmt ist, festzulegen auf welchen Bus sämtliche Steuereinheiten ihre Nachrichten auszugeben haben.

Eine höhere Datensicherheit ergibt sich aber, wenn jede Steuereinheit individuell den Kommunikationsbus überprüft und bei einer festgestellten Störung autonom ihre Nachrichten auf den Kommunikationsbus ausgibt und eventuell den anderen Steuereinheiten ein Fehlersignal auf dem Kommunikationsbus und/oder dem Diagnose- oder Applikationsbus sendet.

Alternativ kann auch vorgesehen sein, daß die Steuereinheiten ihre Nachrichten simultan auf dem Kommunikationsbus und dem Applikations- oder Diagnosebus ausgeben, solange keine Programmierung der Steuereinheiten oder ein Auslesen eines Fehlerspeichers erfolgen soll.

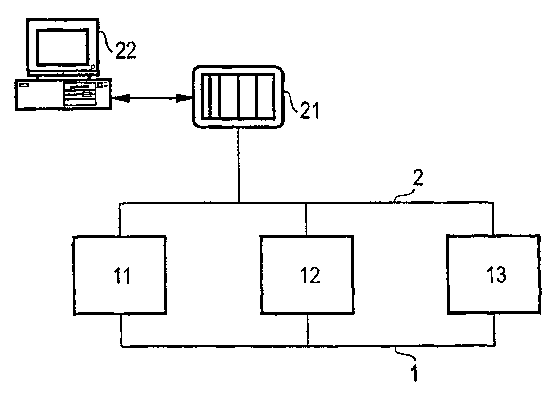

Weitere Merkmale, Vorteile und Anwendungsmöglichkeiten der Erfindung ergeben sich aus der Beschreibung eines Ausführungsbeispiels in Verbindung mit der Zeichnung.

Die Figur zeigt ein erfindungsgemäßes Bussystem.

Über einen Kommunikationsbus 1 und einen Applikationsbus 2, bei denen es sich jeweils um einen CAN-Bus handelt, sind die Steuereinheiten 11, 12 und 13 miteinander verbunden.

Die Steuereinheiten steuern einen Verbrennungsmotor eines Kraftfahrzeugs mit einem elektromagnetischen Ventiltrieb. Die Steuereinheit 11 ist eine Motorsteuerung, die Steuereinheit 12 ist eine intelligente Endstufe für den elektromagnetischen Ventiltrieb und die Steuereinheit 13 ist ein Kontrollrechner für einen Kurbelwellen-Starter-Generator.

Zusätzlich sind Sensoren mit dem Bussystem verbunden, wie beispielsweise eine Landasonde, ein Temperatursensor und ein Luftmassensensor, die in der Figur nicht dargestellt sind.

Mit dem Applikationsbus 2 ist eine Schnittstelle 21 zum Anschluß eines Applikationssystems 22 verbunden. Das Applikationssystem 22 ist ein Personalcomputer mit dem während der Fahrzeugentwicklung Applikations-Parameter auf den Applikationsbus 2 übertragen werden können. Der Applikationsbus ist auch zum Auslesen des Fehlerspeichers einer oder mehrerer Steuereinheiten in einer Werkstätte nutzbar.

Da ein separater Applikationsbus verwendet wird, treten bei einer Übertragung der Applikations-Parameter bei gleichzeitigem Betrieb des Fahrzeugmotors selbst bei hohen Motordrehzahlen keine durch eine erhöhte Last bedingte Störungen auf dem Kommunikationsbus 1 auf.

Während des Fahrzeugbetriebs tauschen die Steuereinheiten 11, 12 und 13 Nachrichten über den seriellen Kommunikationsbus 1 aus. Die Nachrichten einer bestimmten Steuereinheit sind an einer definierten Stelle innerhalb eines zyklisch wiederkehrenden Zeitrahmens angeordnet.

Jede der Steuereinheiten überprüft, ob die Nachrichten an der richtigen Stelle des Zeitrahmens und zum erwarteten Zeitpunkt auf dem Kommunikationsbus erscheinen. Ist dies nicht der Fall, so gibt diejenige Steuereinheit, die den Fehler zuerst erkennt, ein Fehlersignal an die übrigen Steuereinheiten oder Teilnehmer aus. Daraufhin werden die Nachrichten auf dem Applikationsbus 2 ausgegeben, so daß weiterhin eine störungsfreie Nachrichtenübertragung erfolgen kann.

Die erkannte Störung des Kommunikationsbusses wird in den Fehlerspeichern der Steuereinheiten abgelegt, so daß sie bei einem Werkstattaufenthalt entdeckt werden kann. Ferner erfolgt eine Warnung an den Fahrzeugführer.

Stellen jedoch auch nach dem Wechsel der Nachrichtenübertragung auf den Applikationsbus wenigstens 2 Steuereinheiten das Ausbleiben einer Nachricht innerhalb der ihr zugeordneten Position im Zeitrahmen fest, so kann daraus geschlossen werden, daß nicht der Kommunikationsbus einen Defekt aufweist, sondern die betreffende Steuereinheit oder der betreffende Busteilnehmer, dem diese Nachricht zugeordnet ist. In diesem Fall wird in den Fehlerspeichern der Steuereinheiten die Fehlermeldung gelöscht, die den Kommunikationsbus als Fehlerquelle identifiziert, und eine Fehlermeldung gespeichert, die diejenige Steuereinheit oder denjenigen Teilnehmer bezeichnet, deren Nachrichten nicht an der vorgegebenen Position innerhalb des Zeitrahmens erscheinen. Der identifizierte Fehler wird dem Fahrzeugführer ausgegeben werden.

## Patentansprüche

1. Bussystem zum Verbinden von Steuereinheiten (11; 12; 13) in einem Fahrzeug, das aufweist:
- einen mit den Steuereinheiten (11; 12; 13) verbundenen Kommunikations-Bus (1) zur Übertragung von Nachrichten zwischen den Steuereinheiten (11; 12; 13),
- einen mit den Steuereinheiten (11; 12; 13) dauerhaft verbundenen, separaten Applikations- oder Diagnose-Bus (2),
**dadurch gekennzeichnet, dass**
die Übertragung der Nachrichten zwischen den Steuereinheiten (11; 12; 13) bei einer Störung des Kommunikations-Busses (1) auf dem Applikations- oder Diagnose-Bus (2) erfolgt.

2. Bussystem nach Anspruch 1, **dadurch gekennzeichnet, daß** sowohl der Kommunikations-Bus (1) als auch der Applikations- oder Diagnose-Bus (2) nach demselben Bus-Protokoll arbeiten.

3. Bussystem nach dem vorhergehenden Anspruch, **dadurch gekennzeichnet, daß** der Kommunikations-Bus (1) und der Applikations- oder Diagnose-Bus (2) CAN-Busse sind.

4. Bussystem nach einem der vorhergehenden Ansprüche, **dadurch gekennzeichnet, daß** eine erste Steuereinheit (11) eine Motorsteuerung ist, eine zweite Steuereinheit (12) eine Steuerung eines elektromagnetischen Ventiltriebs ist und eine dritte Steuereinheit (13) die Steuerung eines Kurbelwellen-Starter-Generators ist.

5. Verfahren zur Übertragung von Nachrichten zwischen Steuereinheiten (11; 12; 13), die jeweils mit einem KommunikationsBus (1) zum Austausch von Nachrichten und dauerhaft mit einem separaten Applikations- oder Diagnose-Bus (2) verbunden sind,
**dadurch gekennzeichnet, dass**
bei einer Störung des Kommunikationsbusses (1) die Nachrichten zwischen den Steuereinheiten (11; 12; 13) auf dem Applikations- oder Diagnose-Bus (2) übertragen werden.

6. Verfahren nach dem vorhergehenden Anspruch, **dadurch gekennzeichnet, daß** die Nachrichten der Steuereinheiten (11; 12; 13) auf dem Applikations- oder Diagnose-Bus (2) übertragen werden, wenn in einem vorgegebenen, zyklisch wiederkehrenden Zeitrahmen eine Nachricht einer Steuereinheit (11; 12; 13) nicht identifiziert werden kann, die diesem Zeitrahmen zugeordnet ist.

7. Verfahren nach dem vorhergehenden Anspruch, **dadurch gekennzeichnet, daß** die Nachrichten der Steuereinheiten (11; 12; 13) wieder auf dem Kommunikations-Bus (1) ausgegeben werden, wenn auf dem Applikations- oder Diagnose-Bus (2) in einem vorgegebenen, zyklisch wiederkehrenden Zeitrahmen eine Nachricht einer Steuereinheit (11; 12; 13) nicht identifiziert werden kann, die diesem Zeitrahmen zugeordnet ist.

8. Verfahren nach einem der vorhergehenden Verfahrensansprüche, **dadurch gekennzeichnet, daß** Störungen auf dem Kommunikations-Bus (1) und/oder dem Applikations- oder Diagnose-Bus (2) von einer hierfür zuständigen Steuereinheit (11; 12; 13) festgestellt werden, und daß die Ausgabe der Nachrichten aller Steuereinheiten (11; 12; 13) entweder auf den Applikations- oder Diagnose-Bus(2) oder den Kommunikations-Bus (1) von dieser Steuereinheit gesteuert werden.

## Claims

1. Bus system for connecting control units (11, 12, 13) in a vehicle, having
- a communication bus (1) connected to the control units (11, 12, 13) for transferring data between the control units (11, 12, 13),
- a separate application bus or diagnostic bus (2) which is permanently connected to the control units (11, 12, 13),
**characterised in that** when there is a malfunction of the communication bus (1) the data is transferred between the control units (11, 12, 13) on the application or diagnostic bus (2).

2. Bus system according to Claim 1, **characterised in that** both the communication bus (1) and the application or diagnostic bus (2) operate according to the same bus protocol.

3. Bus system according to the previous claim, **characterised in that** the communication bus (1) and the application or diagnostic bus (2) are CAN buses.

4. Bus system according to one of the previous claims, **characterised in that** a first control unit (11) is an engine controller, a second control unit (12) is a controller for an electromagnetic valve mechanism, and a third control unit (13) is the controller for a crankshaft starter-generator.

5. Method for transferring data between control units (11, 12, 13), all of which are connected with a communication bus (1) for exchanging data and are permanently connected with a separate application or diagnostic bus (2), **characterised in that** if there is a malfunction in the communication bus (1) the data is transferred between the control units (11, 12, 13) on the application or diagnostic bus (2).

6. Method according to the previous claim, **characterised in that** the data from the control units (11, 12, 13) is transferred on the application or diagnostic bus (2), if within a prescribed, cyclically recurring time frame a message from a control unit (11, 12, 13) cannot be identified which is assigned to that time frame.

7. Method according to the previous claim, **characterised in that** the data from the control units (11, 12, 13) is again output to the communication bus (1), if on the application or diagnostic bus within a prescribed, cyclically recurring time frame a message from a control unit (11, 12, 13) cannot be identified which is assigned to that time frame.

8. Method according to one of the preceding method claims, **characterised in that** malfunctions on the communication bus (1) and/or the application or diagnostic bus (2) are recognised by a control unit (11, 12, 13) which is responsible for this, and that the output of the data from all of the control units (11, 12, 13) either to the application or diagnostic bus (2) or to the communication bus (1) is controlled by this control unit.

## Revendications

1. Système de bus permettant de relier les unités de commande (11, 12, 13) dans un véhicule qui présente :
- un bus de communication (1) relié aux unités de commande (11, 12, 13) permettant de transmettre des messages entre les unités de commande (11, ,12, 13),
- un bus d'application ou de diagnostic (2) séparé, relié en permanence aux unités de commande (11, 12, 13),
**caractérisé par le fait que**
la transmission des messages entre les unités de commande (11, 12, 13) s'effectue sur le bus d'application ou de diagnostic (2) en cas de perturbation du bus de communication (1).

2. Système de bus conformément à la revendication 1, **caractérisé par le fait que** le bus de communication (1) aussi bien que le bus d'application ou de diagnostic (2) fonctionnent selon le même protocole de bus.

3. Système de bus conformément à la revendication précédente, **caractérisé par le fait que** le bus de communication (1) et le bus d'application ou de diagnostic (2) sont des bus CAN.

4. Système de bus conformément à l'une des revendications précédentes, **caractérisé par le fait qu'**une première unité de commande (11) est une commande de moteur, une deuxième unité de commande (12) est une commande pour un actionnement électromagnétique des soupapes et une troisième unité de commande (13) est la commande d'un alternateur-démarreur associé à un vilebrequin.

5. Procédé permettant de transmettre des messages entre les unités de commande (11, 12, 13) qui sont respectivement reliées à un bus de communication (1) destiné à échanger des messages et qui sont reliées en permanence à un bus d'application ou de diagnostic séparé (2), **caractérisé par le fait que** les messages sont transmis au bus d'application ou de diagnostic (2) entre les unités de commande (11, 12, 13) en cas de perturbation du bus de communication (1).

6. Procédé conformément à la revendication précédente, **caractérisé par le fait que** les messages des unités de commande (11, 12, 13) sont transmis au bus d'application ou de diagnostic (2), si à l'intérieur d'une trame temporelle à récurrence cyclique, un message d'une unité de commande (11, 12, 13) affecté à cette trame temporelle ne peut être identifié.

7. Procédé conformément à la revendication précédente, **caractérisé par le fait que** les messages des unités de commande (11, 12, 13) sont de nouveau émis sur le bus de communication (1), si sur le bus d'application ou de diagnostic (2), à l'intérieur d'une trame temporelle à récurrence cyclique, un message d'une unité de commande (11, 12, 13) affecté à cette trame temporelle ne peut être identifié.

8. Procédé conformément à l'une des revendications de procédé précédentes, **caractérisé par le fait que** des perturbations sont constatées sur le bus de communication (1) et/ou le bus d'application ou de diagnostic (2) par une unité de commande (11, 12, 13) qui est chargée de cette tâche et en ce que l'émission des messages de l'ensemble des unités de commande (11, 12, 13) est commandée, soit sur le bus d'application ou de diagnostic (2), soit sur le bus de communication (1) par cette unité de commande.
